# EUROPEAN PATENT SPECIFICATION

(11) **EP 4 231 019 B1**
(45) Date of publication and mention of the grant of the patent: **18.12.2024**
(21) Application number: 22157371.0
(22) Date of filing: 17.02.2022
(51) Int. Cl.: G01N 35/00, B01L 9/00

(54) **LABORATORY SYSTEM**
LABORSYSTEM
SYSTÈME DE LABORATOIRE

(43) Date of publication of application: 23.08.2023
(73) Proprietor: Roche Diagnostics GmbH, 68305 Mannheim (DE); F. Hoffmann-La Roche AG, 4070 Basel (CH)
(72) Inventor: Kollmer, Markus, 70191 Stuttgart (DE); Rein, Michael, 70736 Fellbach (DE); Vasile, Teodor-Laurentiu, 81547 Munich (DE); Ali-Mahmoud, Yanis, 80809 Munich (DE)
(74) Representative: Patentanwälte Ruff, Wilhelm, Beier, Dauster & Partner mbB

(56) References cited:
- US-A1- 2010 279 338
- US-A1- 2014 240 096
- US-A1- 2017 136 467
- US-A1- 2018 045 641
- US-B2- 10 140 705

## Description

The invention relates to a laboratory system.

So called in-sorters and out-sorters are laboratory systems used in laboratory automation. The function of an in-sorter or out-sorter is the handling of laboratory sample containers comprising samples to be processed, e.g. by a laboratory station. The in-sorter transfers laboratory sample containers from a container storing position to a sample container transport unit. The sample container transport unit transports the laboratory sample containers to a corresponding laboratory station for processing samples comprised in the laboratory sample containers. The processed samples are transported by the sample container transport unit to the out-sorter. The out-sorter transfers the laboratory sample containers from the sample container transport unit to a storing position.

The laboratory sample containers are often stored in racks, wherein a rack is adapted to store a certain number of laboratory sample containers. The number of laboratory sample containers to be stored depends on the type of the rack. The in-sorter is adapted to remove the laboratory sample containers from a container storing position inside the rack and transfer them to the sample container transport unit. Typically, an empty rack is placed in the out-sorter, wherein laboratory sample containers comprising processed samples are inserted into this rack.

For removing laboratory sample containers from the rack or inserting laboratory sample containers in the rack the in-sorter and out-sorter need to know the position and the type of a rack, i.e. the position and the number of possible storing positions for laboratory sample containers. Thus, according to the prior art, when an in-sorter and an out-sorter are brought into service the type of the rack and possible rack positions have to be transferred to and stored in the sorter for correctly gripping a laboratory sample container. An example is provided in US 2014/240096 A1.

It is an object of the invention to provide a laboratory system having improved properties regarding the prior art.

The laboratory system comprises at least one rack comprising retainers, wherein the at least one rack is adapted to carry laboratory sample containers inserted in the retainers. Reference insofar is made to the corresponding prior art. The number of laboratory sample containers carried by the respective rack may e.g. be a number in the range of 2 up to 150.

The laboratory system further comprises a handling device, e.g. in form of a conventional gripping device or pick-and-place device. The handling device is conventionally adapted to insert laboratory sample containers in the retainers of the rack or to remove laboratory sample containers from the retainers of the rack, when the rack is placed at a dedicated processing position. The handling device handles the laboratory sample containers depending on location information indicating the location of the rack being placed at the processing position relative to the handling device. The location information may e.g. be formed by x- and y-coordinates of a coordinate system of the handling device indicating a specific position of/on the rack, e.g. an edge, a specific retainer, etc.

The laboratory system further comprises a plurality of teaching devices, e.g. between 2 and 100 teaching devices, wherein a respective teaching device is geometrically formed such that it is insertable into a retainer of a rack. A respective teaching device may e.g. be formed like a laboratory sample container.

At least two, in particular at least three or exactly three, teaching devices are e.g. manually inserted into a corresponding retainer of a rack being placed at the processing position before a teach in. The retainers receiving the teaching devices are defined and known.

The laboratory system further comprises a location information calculating device, e.g. in form of a computer, wherein the location information calculating device is adapted to calculate the location information of the rack being placed at the processing position depending on a measured location of the at least two teaching devices.

According to an embodiment a respective teaching device comprises a conventional RFID tag, wherein at least three teaching devices are inserted into a defined corresponding retainer of the rack being placed or to be placed at the processing position. The location information calculating device comprises a conventional RFID reader communicating with the RFID tags.

According to an embodiment the RFID reader is adapted to determine distances between the RFID reader and the at least three teaching devices, wherein the location information calculating device is adapted to calculate the location information of the rack using conventional multi-lateration based on the determined distances.

According to an embodiment the RFID reader is adapted to determine angles, in particular in a RFID reader coordinate system, between the RFID reader and the at least three teaching devices, wherein the location information calculating device is adapted to calculate the location information of the rack also using triangulation based on the determined angles.

According to an embodiment the RFID reader is attached to the handling device, in particular in a moving part of the handling device being moved during a handling operation.

According to an embodiment the RFID tags are battery powered, i.e. are active RFID tags.

According to an embodiment the location information calculating device comprises a digital camera, wherein the digital camera is adapted to take a digital image of the rack and of the teaching devices being inserted into the corresponding retainers of the rack being placed at the processing position, wherein the location information calculating device is adapted to calculate the location information based on the digital image.

According to an embodiment a respective teaching device comprises a mark visible by the digital camera. The mark may e.g. be embodied as a QR-code, a barcode, a color, a printed code comprising numbers and/or letters, e.g. provided on a label or sticker.

According to an embodiment the laboratory system further comprises at least one laboratory station, wherein at least one laboratory station is adapted to perform a type of processing of samples being comprised in the laboratory sample containers. The laboratory stations may be e.g. pre-analytical, analytical and/or post-analytical stations. Pre-analytical stations may be adapted to perform any kind of pre-processing of samples and/or laboratory sample containers. Analytical stations may be adapted to use a sample or part of the sample and/or a reagent to generate a measuring signal, the measuring signal indicating if and in which concentration an analyte exists. Post-analytical stations may be adapted to perform any kind of post-processing of samples and/or sample containers. The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

The invention will be described in detail with respect to the drawings schematically depicting embodiments of the invention. In detail:
- Fig. 1: schematically depicts a top view on a laboratory system according to a first embodiment,
- Fig. 2: schematically depicts a side view on the laboratory system according to the first embodiment,
- Fig. 3: depicts a teach in workflow of the laboratory system of fig. 1 and 2, and
- Fig. 4: schematically depicts a laboratory system according to a further embodiment.

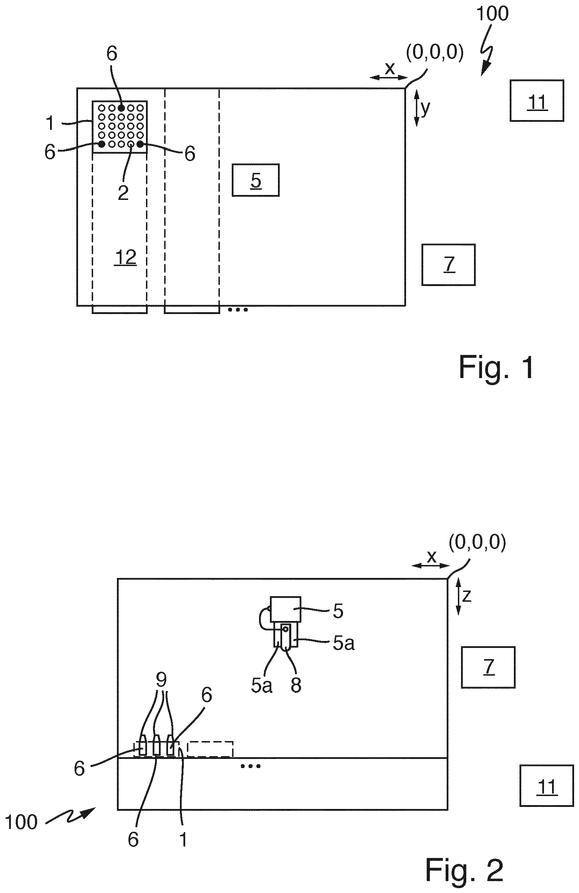

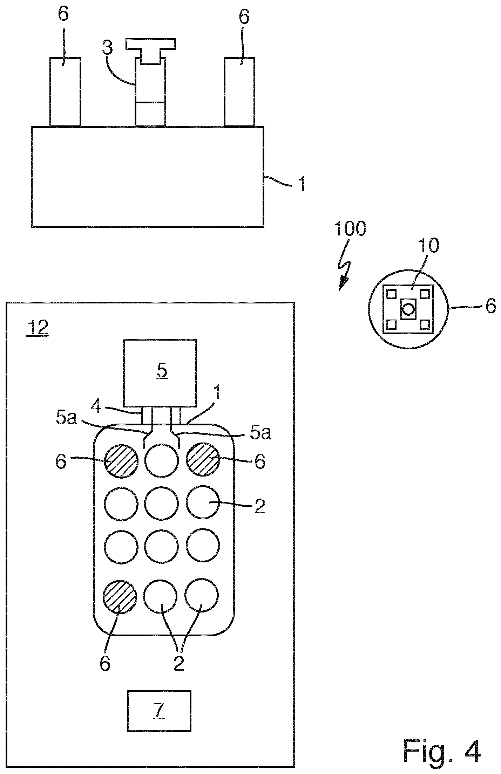

Fig. 1 schematically depicts a top view on a laboratory system 100 comprising a rack 1 having retainers 2, wherein the rack 1 is adapted to carry or receive laboratory sample containers 3 (see Fig. 4) inserted in the retainers 2. Fig. 2 schematically depicts a side view on the laboratory system 100.

The laboratory system 100 comprises a handling device 5 in form of a conventional pick-and-place device comprising a conventional gripping device 5a being movable in x-, y- and z-direction. The handling device 5 is adapted to insert laboratory sample containers 3 in the retainers 2 of the rack 1 or to remove laboratory sample containers 3 from the retainers 2 of the rack 1 when the rack 1 is placed at a processing position. The handling is done depending on location information indicating the location in x- and y-coordinates (and eventually z-coordinates) of the rack 1 being placed at the processing position. The x-, y- and z-coordinates denote the location of the rack 1 in a coordinate system of the handling device 5.

The rack 1 is located at the processing position inside a dedicated pick-and-place area 12 of the laboratory system 100 used for an in-sort operation or an out-sort operation. Initially, the exact location of the rack 1 within the pick-and-place area 12 is not known. By means of the invention the exact location of the rack 1 and thus of the retainers 2 of the rack 1 can be easily determined as will be described in detail below.

For that purpose, the laboratory system 100 further comprises three teaching devices 6 used, in particular only, during teach-in, wherein a respective teaching device 6 is geometrically formed such that it is insertable into a retainer 2 of the rack 1. As shown, the teaching devices 6 are inserted into dedicated and known retainers 2 of the rack 1, i.e. at specific positions in the rack 1. E.g., for a standard rack 1 of 5 columns and 10 rows the teaching devices 6 could be placed like depicted. The placement of the teaching devices 6 in the rack 1 for a specific and known shape/type of rack for performing a teach in is a priori known and well defined.

The laboratory system 100 further comprises a location information calculating device 7, wherein the location information calculating device 7 is adapted to calculate the location information or location of the rack 1 being placed at the processing position depending on the respective locations of the teaching devices 6.

For that purpose, the teaching devices 6 respectively comprise an active RFID tag 9 and the location information calculating device 7 comprises a RFID reader 8.

The RFID tags 9 may store information regarding the type of the rack 1, i.e. information regarding the geometrical size of the rack 1, the number and relative locations of the retainers 2, etc.

The RFID reader 8 is adapted to determine a respective distance between the RFID reader 8 and the teaching devices 6, wherein the location information calculating device 7 is adapted to calculate the location information of the rack 1 using multilateration based on the determined respective distances. The RFID reader 8 measures the signal strength of the signals received by the RFID tags 9. For a 2-dimensional positioning range measurement at least three RFID tags 9 are necessary. The respective distance between the RFID reader 8 and the RFID tags 9 is deduced from the conversion of signal strength into distances.

In addition, the RFID reader 8 may be adapted to determine a respective angle in a x-y-plane between the RFID reader 8 and the teaching devices 6, wherein the location information calculating device 7 may be adapted to calculate the location information of the rack 1 alternatively or in addition using triangulation based on the determined respective angles.

The RFID reader 8 or an antenna of the RFID reader 8 is, in particular only during teach in, attached to the handling device 5, and may e.g. be gripped by the gripping device 5a during teach in.

The depicted laboratory system 100 uses, inter alia, multi-lateration or trilateration and/or multi-angulation or triangulation for calculating the absolute coordinates of the rack 1 and thus of sample container carriers 3 received by the rack 1 relative to a so-called homing position (0, 0, 0) in x-, y- and z-coordinates of the handling device 5.

During teach in, the gripping device 5a together with the RFID reader 8 is initially moved to a center position within the pick-and-place area 12, e.g. at a half distance of the maximum range for a planar axis system.

Three RFID tags 9 per rack 1 are used to perform triangulation/trilateration and to calculate the absolute coordinates of the rack 1. The active RFID tags 9 mounted inside of the teaching devices 6 are powered by an internal rechargeable battery. The internal rechargeable batteries may e.g. be inductively charged.

For the triangulation/trilateration to work reliably the signal strength and the angle of arrival of the signal of the RFID tags 9 are used.

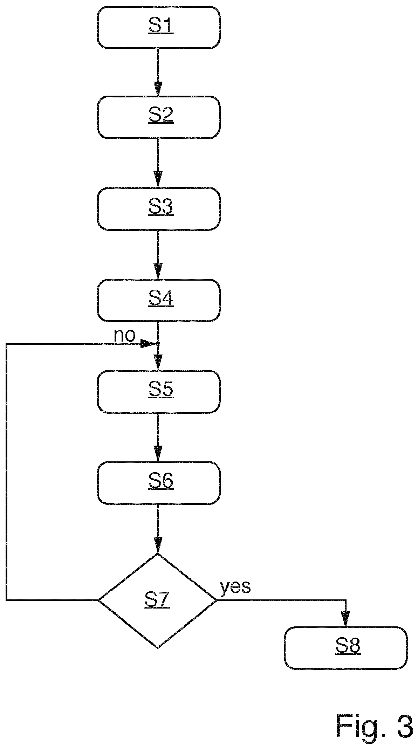

Referring now to fig. 3, the teach in may comprise the following steps:

| | |
|---|---|
| S1: | An operator starts the teach in. |
| S2: | The teaching devices 6 are e.g. manually inserted into the retainers 2 of the rack 1 located on or to be located on the pick-and-place area 12. For rectangular racks 1 three tags are necessary/sufficient. The RFID reader 8 is fixed to/by the handling device 5. |
| S3: | The handling device 5 is moved to the absolute coordinate (0,0,0) in a coordinate system of the handling device 5. |
| S4: | The handling device 5 is moved to a central/middle position of the pick-and-place area 12, e.g. at the mid distance of the maximum permitted by the x- and y-axis system. |
| S5: | From this middle position the RFID reader 8 starts the measurement, therefore the RFID reader 8 connects to the active RFID tags 9, and the active RFID tags 9 answer by communicating their unique tag ID. |
| S6: | The RFID reader 8 measures the signal strength/signal angle of the associated active RFID tag 9. This procedure is repeated for all three active RFID tags 9 in the rack 1. Based on the measured signal strength/signal angle the location of the rack 1 is calculated using trilateration and/or triangulation. |
| S7: | The RFID reader 8 continues the same type of measurement for all further racks 1, if any, placed within the pick-and-place area 12. |
| S8: | The teach in is ended. |

Fig. 4 schematically depicts a laboratory system 100 according to a further embodiment.

According to this embodiment the location information calculating device 7 comprises a spatially calibrated digital camera 4 replacing the RFID reader 8 of the embodiment depicted in fig. 1 and 2, wherein the digital camera 4 is adapted to take a digital image of the rack 1 and of the teaching devices 6 being inserted into the corresponding retainers 2 of the rack 1 being placed at the processing position within the pick-and-place area 12. The location information calculating device 7 is adapted to calculate the location information based on the digital image.

The digital camera 4 may be attached to the handling device 5.

A respective teaching device 6 comprises a mark 10 visible by the digital camera 4. The mark 10 may e.g. be a QR code also indicating the type of the rack 1. The positions of the teaching devices 6 extracted from the digital image together with rack specific data derived from the QR code may be used to calculate the position of the rack 1 and the positions of the retainers 2 of the rack 1.

During the setup of the laboratory system 100 the three teaching devices 6 are placed in a respective rack 1. For a dedicated rack 1 the teaching tools 6 may have the same mark 10 on top. If more than one rack 1 is teached in, each rack may have a specific mark 10. This may be realized by a QR code or a pattern for example. After the placement, the digital camera 4 is scanning the surface and recognizing all the marks 10. By means of the positions and the types of the marks the rack 1 can be identified and localized. If several racks have similar marks, a user can e.g. choose the correct rack in an user interface.

The embodiments depicted in the figures depict a single rack 1. Self-evidently, the invention may be embodied in conjunction with more than one rack.

The laboratory system 100 further comprises at least one conventional laboratory station 11 being adapted to perform a type of processing of samples being comprised in the laboratory sample containers.

## Claims

1. Laboratory system (100), comprising:
- at least one rack (1) comprising retainers (2), wherein the at least one rack (1) is adapted to carry laboratory sample containers (3) inserted in the retainers (2), and
- a handling device (5), wherein the handling device (5) is adapted to insert laboratory sample containers (3) in the retainers (2) of the at least one rack (1) or remove laboratory sample containers (3) from the retainers (2) of the at least one rack (1) being placed at a processing position depending on location information indicating the location of the at least one rack (1) being placed at the processing position relative to the handling device (5),
**characterized in that** the laboratory system (100) further comprises:
- a plurality of teaching devices (6),
- wherein a respective teaching device (6) is geometrically formed such that it is insertable into a retainer (2) of the at least one rack (1), and
- wherein at least two, in particular at least three, teaching devices (6) are inserted into a corresponding retainer (2) of the at least one rack (1) being placed at the processing position, and
- a location information calculating device (7), wherein the location information calculating device (7) is adapted to calculate the location information of the at least one rack (1) being placed at the processing position depending on the location of the at least two teaching devices (6).

2. Laboratory system (100) according to claim 1, **characterized in that**
- a respective teaching device (6) comprises a RFID tag (9),
- at least three teaching devices (6) are inserted into a corresponding retainer (2) of the at least one rack (1) being placed at the processing position, and
- the location information calculating device (7) comprises a RFID reader (8).

3. Laboratory system (100) according to claim 2, **characterized in that**
- the RFID reader (8) is adapted to determine distances between the RFID reader (8) and the at least three teaching devices (6), wherein the location information calculating device (7) is adapted to calculate the location information of the at least one rack (1) using multi-lateration based on the determined distances.

4. Laboratory system (100) according to claim 2 or 3, **characterized in that**
- the RFID reader (8) is adapted to determine angles between the RFID reader (8) and the at least three teaching devices (6), wherein the location information calculating device (7) is adapted to calculate the location information of the at least one rack (1) using triangulation based on the determined angles.

5. Laboratory system (100) according to any one of claims 2 to 4, **characterized in that**
- the RFID reader (8) is attached to the handling device (5).

6. Laboratory system (100) according to any one of claims 2 to 5, **characterized in that**
- the RFID tags (9) are battery powered.

7. Laboratory system (100) according to any one of the preceding claims, **characterized in that**
- the location information calculating device (7) comprises a digital camera (4), wherein the digital camera (4) is adapted to take a digital image of the at least one rack (1) and of the teaching devices (6) being inserted into the corresponding retainers (2) of the at least one rack (1) being placed at the processing position, wherein the location information calculating device (7) is adapted to calculate the location information based on the digital image.

8. Laboratory system (100) according claim 7, **characterized in that**
- a respective teaching device (6) comprises a mark (10) visible by the digital camera (4).

9. Laboratory system (100) according claim 8, **characterized in that**
- the mark is a QR code (10).

10. Laboratory system (100) according claim 9, **characterized in that**
- the QR code (10) indicates the type of the at least one rack (1).

11. Laboratory system (100) according to any one of the preceding claims, **characterized in that** the laboratory system (100) further comprises:
- at least one laboratory station (11), wherein the at least one laboratory station (11) is adapted to perform a type of processing of samples being comprised in the laboratory sample containers (3).

## Patentansprüche

1. Laborsystem (100), umfassend:
- mindestens ein Gestell (1), umfassend Halterungen (2), wobei das mindestens eine Gestell (1) zum Tragen von Laborprobenbehältern (3), die in die Halterungen (2) eingeführt sind, ausgelegt ist, und
- eine Handhabungsvorrichtung (5), wobei die Handhabungsvorrichtung (5) zum Einführen von Laborprobenbehältern (3) in die Halterungen (2) des mindestens einen Gestells (1) oder zum Entfernen von Laborprobenbehältern (3) aus den Halterungen (2) des mindestens einen Gestells (1), das an einer Verarbeitungsposition platziert ist, die von Standortinformationen abhängt, die den Standort des mindestens einen Gestells (1) angeben, das an der Verarbeitungsposition in Bezug auf die Handhabungsvorrichtung (5) platziert ist, ausgelegt ist,
**dadurch gekennzeichnet, dass** das Laborsystem (100) ferner Folgendes umfasst:
- eine Vielzahl von Lehrvorrichtungen (6),
- wobei eine jeweilige Lehrvorrichtung (6) geometrisch so geformt ist, dass sie in eine Halterung (2) des mindestens einen Gestells (1) eingeführt werden kann, und
- wobei mindestens zwei, insbesondere mindestens drei, Lehrvorrichtungen (6) in eine entsprechende Halterung (2) des mindestens einen Gestells (1), das an der Verarbeitungsposition platziert ist, eingeführt werden, und
- eine Standortinformationsberechnungsvorrichtung (7), wobei die Standortinformationsberechnungsvorrichtung (7) zum Berechnen der Standortinformationen des mindestens einen Gestells (1), das an der Verarbeitungsposition platziert ist, die von dem Standort der mindestens zwei Lehrvorrichtungen (6) abhängt, ausgelegt ist.

2. Laborsystem (100) nach Anspruch 1, **dadurch gekennzeichnet, dass**
- eine jeweilige Lehrvorrichtung (6) ein RFID-Tag (9) umfasst,
- mindestens drei Lehrvorrichtungen (6) in eine entsprechende Halterung (2) des mindestens einen Gestells (1), das an der Verarbeitungsposition platziert ist, eingeführt werden und
- die Standortinformationsberechnungsvorrichtung (7) ein RFID-Lesegerät (8) umfasst.

3. Laborsystem (100) nach Anspruch 2, **dadurch gekennzeichnet, dass**
- das RFID-Lesegerät (8) zum Bestimmen von Abständen zwischen dem RFID-Lesegerät (8) und den mindestens drei Lehrvorrichtungen (6) ausgelegt ist, wobei die Standortinformationsberechnungsvorrichtung (7) zum Berechnen der Standortinformationen des mindestens einen Gestells (1) unter Anwendung von Multilateration basierend auf den bestimmten Abständen ausgelegt ist.

4. Laborsystem (100) nach Anspruch 2 oder 3, **dadurch gekennzeichnet, dass**
- das RFID-Lesegerät (8) zum Bestimmen von Winkeln zwischen dem RFID-Lesegerät (8) und den mindestens drei Lehrvorrichtungen (6) ausgelegt ist, wobei die Standortinformationsberechnungsvorrichtung (7) zum Berechnen der Standortinformationen des mindestens einen Gestells (1) unter Anwendung von Triangulation basierend auf den bestimmten Winkeln ausgelegt ist.

5. Laborsystem (100) nach einem der Ansprüche 2 bis 4, **dadurch gekennzeichnet, dass**
- das RFID-Lesegerät (8) an der Handhabungsvorrichtung (5) befestigt ist.

6. Laborsystem (100) nach einem der Ansprüche 2 bis 5, **dadurch gekennzeichnet, dass**
- die RFID-Tags (9) batteriebetrieben sind.

7. Laborsystem (100) nach einem der vorstehenden Ansprüche, **dadurch gekennzeichnet, dass**
- die Standortinformationsberechnungsvorrichtung (7) eine Digitalkamera (4) umfasst, wobei die Digitalkamera (4) zum Aufnehmen eines digitalen Bildes von dem mindestens einen Gestell (1) und den Lehrvorrichtungen (6), die in die entsprechenden Halterungen (2) des mindestens einen Gestells (1) eingeführt sind, das an der Verarbeitungsposition platziert ist, ausgelegt ist, wobei die Standortinformationsberechnungsvorrichtung (7) zum Berechnen der Standortinformationen basierend auf dem digitalen Bild ausgelegt ist.

8. Laborsystem (100) nach Anspruch 7, **dadurch gekennzeichnet, dass**
- eine jeweilige Lehrvorrichtung (6) eine Markierung (10) umfasst, die die Digitalkamera (4) erkennen kann.

9. Laborsystem (100) nach Anspruch 8, **dadurch gekennzeichnet, dass**
- die Markierung ein QR-Code (10) ist.

10. Laborsystem (100) nach Anspruch 9, **dadurch gekennzeichnet, dass**
- der QR-Code (10) die Art des mindestens einen Gestells (1) angibt.

11. Laborsystem (100) nach einem der vorstehenden Ansprüche, **dadurch gekennzeichnet, dass** das Laborsystem (100) ferner Folgendes umfasst:
- mindestens eine Laborstation (11), wobei die mindestens eine Laborstation (11) zum Durchführen einer Art der Verarbeitung von Proben, die in den Laborprobenbehältern (3) umfasst sind, ausgelegt ist.

## Revendications

1. Système de laboratoire (100), comprenant :
- au moins un portoir (1) comprenant des dispositifs de retenue (2), l'au moins un portoir (1) étant adapté pour porter des récipients d'échantillon de laboratoire (3) insérés dans les dispositifs de retenue (2), et
- un dispositif de manipulation (5), le dispositif de manipulation (5) étant adapté pour insérer des récipients d'échantillon de laboratoire (3) dans les dispositifs de retenue (2) de l'au moins un portoir (1) ou retirer des récipients d'échantillon de laboratoire (3) des dispositifs de retenue (2) de l'au moins un portoir (1) placé au niveau d'une position de traitement en fonction des informations d'emplacement indiquant l'emplacement de l'au moins un portoir (1) placé au niveau de la position de traitement par rapport au dispositif de manipulation (5),
**caractérisé en ce que** le système de laboratoire (100) comprend en outre :
- une pluralité de dispositifs d'apprentissage (6),
- un dispositif d'apprentissage (6) respectif étant formé géométriquement de telle sorte qu'il est insérable dans un dispositif de retenue (2) de l'au moins un portoir (1), et
- au moins deux, en particulier au moins trois, dispositifs d'apprentissage (6) étant insérés dans un dispositif de retenue (2) correspondant de l'au moins un portoir (1) placé au niveau de la position de traitement, et
- un dispositif de calcul d'informations d'emplacement (7), le dispositif de calcul d'informations d'emplacement (7) étant adapté pour calculer les informations d'emplacement de l'au moins un portoir (1) placé au niveau de la position de traitement en fonction de l'emplacement des au moins deux dispositifs d'apprentissage (6).

2. Système de laboratoire (100) selon la revendication 1, **caractérisé en ce que**
- un dispositif d'apprentissage (6) respectif comprend un marqueur RFID (9),
- au moins trois dispositifs d'apprentissage (6) sont insérés dans un dispositif de retenue (2) correspondant de l'au moins un portoir (1) placé au niveau de la position de traitement, et
- le dispositif de calcul d'informations d'emplacement (7) comprend un lecteur RFID (8).

3. Système de laboratoire (100) selon la revendication 2, **caractérisé en ce que**
- le lecteur RFID (8) est adapté pour déterminer les distances entre le lecteur RFID (8) et les au moins trois dispositifs d'apprentissage (6), le dispositif de calcul d'informations d'emplacement (7) étant adapté pour calculer les informations d'emplacement de l'au moins un portoir (1) en utilisant une multilatération basée sur les distances déterminées.

4. Système de laboratoire (100) selon la revendication 2 ou 3, **caractérisé en ce que**
- le lecteur RFID (8) est adapté pour déterminer des angles entre le lecteur RFID (8) et les au moins trois dispositifs d'apprentissage (6), le dispositif de calcul d'informations d'emplacement (7) étant adapté pour calculer les informations d'emplacement de l'au moins un portoir (1) en utilisant une triangulation basée sur les angles déterminés.

5. Système de laboratoire (100) selon l'une quelconque des revendications 2 à 4, **caractérisé en ce que**
- le lecteur RFID (8) est fixé au dispositif de manipulation (5).

6. Système de laboratoire (100) selon l'une quelconque des revendications 2 à 5, **caractérisé en ce que**
- les marqueurs RFID (9) sont alimentés par batterie.

7. Système de laboratoire (100) selon l'une quelconque des revendications précédentes, **caractérisé en ce que**
- le dispositif de calcul d'informations d'emplacement (7) comprend une caméra numérique (4), la caméra numérique (4) étant adaptée pour prendre une image numérique de l'au moins portoir (1) et des dispositifs d'apprentissage (6) insérés dans les dispositifs de retenue (2) correspondants de l'au moins un portoir (1) placé au niveau de la position de traitement, le dispositif de calcul d'informations d'emplacement (7) étant adapté pour calculer les informations d'emplacement basées sur l'image numérique.

8. Système de laboratoire (100) selon la revendication 7, **caractérisé en ce que**
- un dispositif d'apprentissage (6) respectif comprend un repère (10) visible par la caméra numérique (4).

9. Système de laboratoire (100) selon la revendication 8, **caractérisé en ce que**
- le repère est un code QR (10).

10. Système de laboratoire (100) selon la revendication 9, **caractérisé en ce que**
- le code QR (10) indique le type de l'au moins un portoir (1).

11. Système de laboratoire (100) selon l'une quelconque des revendications précédentes, **caractérisé en ce que** le système de laboratoire (100) comprend en outre :
- au moins une station de laboratoire (11), l'au moins une station de laboratoire (11) étant adaptée pour réaliser un type de traitement des échantillons compris dans les récipients d'échantillon de laboratoire (3).
